# EUROPÄISCHE PATENTSCHRIFT

(11) **EP 0 992 930 B1**
(45) Veröffentlichungstag und Bekanntmachung des Hinweises auf die Patenterteilung: **24.10.2007**
(21) Anmeldenummer: 99113738.1
(22) Anmeldetag: 14.07.1999
(51) Int. Cl.: G06K 1/12, G06K 19/077

(54) **Drucker mit einer Einrichtung zum Ansteuern von Transponderchips**
Printer with arrangement for controlling transponder chips
Imprimante avec agencement pour la commande de transpondeurs à puce

(30) Priorität: 07.10.1998 DE 19846295
(43) Veröffentlichungstag der Anmeldung: 12.04.2000
(73) Patentinhaber: Kabushiki Kaisha Sato, Tokyo 150-0013 (JP)
(72) Erfinder: Heredia, Miguel, 67346 Speyer (DE); Schneider, Peter, 69151 Neckargemünd (DE); Robson, David, Crowborough, East Sussex TN6 2HP (GB)
(74) Vertreter: Grünecker, Kinkeldey, Stockmair & Schwanhäusser Anwaltssozietät

(56) Entgegenhaltungen:
- EP-A- 0 564 051
- EP-A- 0 779 589
- EP-A- 0 903 686
- FR-A- 2 760 209
- PATENT ABSTRACTS OF JAPAN vol. 1997, no. 08, 29. August 1997 (1997-08-29) -& JP 09 104189 A (DENSO CORP), 22. April 1997 (1997-04-22)

## Beschreibung

Die Erfindung bezieht sich auf einen Drucker mit einer Einrichtung zum Bedrucken eines Aufzeichnungsträgers, der wenigstens einen Transponderchip enthält gemäß dem Oberbegriff von Asnpruch 1.

Ein derartiger Drucker ist aus der JP 0435016 A bekannt. Der Drucker weist eine Einrichtung zum Ansteuern des Transponderchips und einen Druckkopf auf. Die Einrichtung zum Ansteuern des Transponderchips umfasst eine Antenne und eine Kontrolleinheit zur Steuerung der Antenne.

Die US 5557096 A beschreibt ein elektronisches Gerät, das als Etikett verwendet wird und angebracht wird, um die Inhalte von Behältern zu identifizieren, an denen es angebracht wird. Das elektronische Etikett umfasst einen eingebetteten Schaltkreis mit einer Antenne und einen Signalprozessor. Darüber hinaus beschreibt diese Druckschrift auch einen Drucker. Einträge, wie die Namen und Adressen des Empfängers und des Senders und ein Sortiercode werden in vorgesehene Felder eines Lieferungsetiketts und in einen Speicher geschrieben.

Aus der EP-A- 0 564 051 ist beispielsweise eine kontaktlos lesbare ID-Karte bekannt, die aus einem innen liegenden, wieder verwendbaren elektronischen Schaltkreis und einer äußeren, austauschbaren Hülle besteht. Der Schaltkreis kann mittels einer Antenne Informationen mit einem Transmitter/Receiver austauschen. Die Hülle kann mittels eines separaten Druckers mit Informationen bedruckt werden, die sich auf die ID-Karte beziehen.

Aus der EP-A-0 903 686 ist eine Vorrichtung mit einer Einrichtung zum Bedrucken eines Datenträgers bekannt, der einen oder mehrere Transponderchips enthält. Die Vorrichtung umfasst ferner eine Einrichtung zum Ansteuern des Transponderchips, mit der Daten in den Transponderchip geschrieben werden können. Es ist dabei eine Steuereinheit vorgesehen, die sowohl die Einrichtung zum Ansteuern des Transponderchips als auch die Druckeinrichtung steuert.

Aus der JP-A- 9 104 189 ist ferner eine Vorrichtung zum Bedrucken von ID-Etiketten bekannt, welche eine Druckeinrichtung zum Bedrucken der ID-Etiketten, eine Transmitter/Receiver-Einheit zum Schreiben von Daten in einen Speicher der ID-Etiketten und eine Steuereinrichtung zum Steuern der Druckeinrichtung und der Transmitter/Receiver-Einheit umfasst. Mit dieser bekannten Vorrichtung können die Etiketten mit Informationen bedruckt werden, die auf der im Speicher abgelegten, Information basiert.

Im Stande der Technik sind Drucker zum Bedrucken von Aufzeichnungsträgern bekannt. Weiterhin sind Transponderchips zum elektronischen Abspeichern von Daten, insbesondere Produktinformationen, bekannt, deren Integration in Aufzeichnungsträger - insbesondere Etiketten - wünschenswert ist. Bisher erweist es sich jedoch als nötig, derartige Aufzeichungsträger separat zu bedrucken, und im Anschluß daran - oder zuvor - Informationen in die Transponder einzuschreiben oder daraus auszulesen. Es sind somit zwei separate Schritte nötig, die zeitaufwendig sind und somit das Produkt verteuern.

Die Aufgabe der vorliegenden Erfindung besteht darin, einen Aufzeichnungsträger mit darin integrierten Transponderchips schnell und einfach sowohl zu bedrucken als auch die Transponderchips zum Lesen oder Schreiben von Daten anzusteuern.

Die zuvor genannten und weitere Aufgaben der vorliegenden Erfindung werden gelöst durch einen Drucker gemäß Anspruch 1. Bevorzugte Ausführungsformen werden durch die Unteransprüche beansprucht

Der Kerngedanke besteht darin, einen an sich bekannten Drucker mit einer Einrichtung zum Ansteuern des Transponderchips zu versehen. Somit kann in einem Verfahrel188ch.ritt sowohl ein Bedrucken des Aufzeichnungsträgers als auch eine Ansteuerung des Transponderchips erfolgen.

Die Vorteile der Erfindung bestehen vornehmlich in einer Zeitersparnis, da gleichzeitig (oder kurz nacheinander) das Drucken und das Ansteuern des Transponderchips erfolgt. Wenn gedruckte und in den Transponderchip geschriebene Daten miteinander zusammenhängen, tritt eine wesentliche Vereinfachung dadurch ein, daß kein Scannen des gedruckten Bildes vor dem Einschreiben von Daten in den Transponderchip nötig ist, bzw. kein Lesen des Transponderchips vor dem Drucken.

Der Aufzeichnungsträger ist vorzugsweise ein Etikettenstreifen, und die Transponderchips sind in die Etiketten integriert. Als Etikett wird hier insbesondere ein selbstklebendes Etikett, das z.B. auf einem Trägerband aufgeklebt ist, oder ein als Anhänger nutzbares Etikett ohne Klebstoffschicht verstanden.

Die Art der Einrichtung zum Bedrucken des Aufzeichnungsträgers ist im Rahmen des erfindungsgemäßen Gedankens beliebig. Sie kann beispielsweise einen Thermodruckkopf oder einen Tintenstrahldruckkopf aufweisen.

Der Drucker weist in der Regel eine Steuerschaltung (insbesondere einen Mikroprozessor) zum Ansteuern der Einrichtung zum Bedrucken des Aufzeichnungsträgers auf. Die Steuerschaltung ist vorzugsweise auch zum Steuern der Einrichtung zum Ansteuern des Transponderchips eingerichtet. Der Vorteil besteht zum einen in der unproblematischen Synchronisation von Druckvorgang auf dem Aufzeichnungsträger und Ansteuervorgang des Transponderchips.

Zu anderen kann eine gemeinsame Datenquelle verwendet werden, so daß ein Teil der Daten, die auf einen Auszeichnungträger auszugeben sind, gedruckt werden - z.B. Strichcodes (Barcodes) oder lesbare Zeichen - und ein anderer Teil in den Transponderchip eingeschrieben werden.

Die auf den Transponderchip auszugebenden Daten können als zusätzliches Datenfeld einer Etikettendefinition (dh. ein bedrucktes Etikett definierenden Daten) behandelt werden, dh. gemeinsam mit den auszudruckenden Daten von einer Datenquelle (Computer) zum Drucker übertragen werden. Die Definition der auf einen Aufzeichnungsträger auszugebenden Daten kann also beispielsweise so aussehen:
Strichcode (Größe, Position, Daten);
Text (Größe, Position, Daten);
Transponderdaten (Daten).

Bei einer derartigen Definition wird ein Strichcode mit der definierten Größe an die definierte Position auf dem Aufzeichnungsträger gedruckt, wobei die Daten als Strichcodes dargestellt werden. Analog wird der Text mit der definierten Größe an die definierte Position auf den Aufzeichnungsträger gedruckt, mit den Daten als lesbarer Klartext. Die Transponderdaten werden hingegen in den Transponderchip eingeschrieben.

In einer alternativen Betriebsart sendet der Computer die Transponderdaten in einem sogenannten Bypass-Modus direkt an die Einrichtung zum Ansteuern des Transponderchips. Die Transponderdaten sind in dieser Betriebsart nicht in die Definition der auszudruckenden Daten eingebettet, sondern werden separat vom Computer zum Drucker übertragen. Auf Seiten der Hardware erfolgt die Übertragung in beiden Betriebsarten gleich, nämlich vom Computer über die Steuerschaltung des Druckers zur Einrichtung zum Ansteuern der Transponderchips, während sich softwareseitig im wesentlichen das Übertragungsprotokoll der Datenübertragung vom Computer zum Drucker unterscheidet, und die Aufbereitung der Transponderdaten durch die Steuerschaltung des Druckers. Der Drucker kann zwischen beiden beschriebenen Betriebsarten umschaltbar sein, oder ausschließlich nach einer Betriebsart arbeiten.

Die Einrichtung zum Ansteuern des Transponderchips kann geeignet sein, Daten in den Transponderchip zu schreiben und/oder Daten aus dem Transponderchip zu lesen. Zusätzlich oder alternativ kann sie eingerichtet sein, die Funktion des Transponderchips zu testen. Das kann insbesondere durch Einschreiben und Auslesen von Daten, und Vergleich der ausgelesenen Daten mit den eingeschriebenen Daten erfolgen. Ein einem Transponderchip, der einen Funktionstest nicht bestanden hat, zugeordneter Aufzeichnungsträger wird dann vorzugsweise als unbrauchbar gekennzeichnet, dh. beispielsweise eingeschwärzt oder mit einer entsprechenden Markierung versehen, wie "defekt".

Bezüglich der Positionierung der Einrichtung zum Ansteuern des Transponderchips bestehen im Rahmen des erfindungsgemäßen Gedankens verschiedene Möglichkeiten.

Sie kann bezüglich einer Vorschubrichtung des Aufzeichnungsträgers stromab der Einrichtung zum Bedrucken des Aufzeichnungsträgers angeordnet sein. Dann kann es notwendig sein, den Drukker so einzurichten, daß er den Aufzeichungsträger entgegen der vorschubrichtung zurückfahren kann, um einen Aufzeichnungsträger als unbrauchbar zu kennzeichnen, der einem Transponderchip zugeordnet ist, der einen Funktionstest nicht bestanden hat. In diesem Fall erweist es sich als zweckmäßig, einen anderen Aufzeichnungsträger mit den Daten des Aufzeichnungsträgers mit dem defekten Transponderchip zu bedrucken und zu beschreiben. Die Steuerschaltung der Einrichtung zum Bedrucken des Aufzeichnungsträgers benötigt bei einer stromab der Druckeinrichtung angeordneten Einrichtung zum Ansteuern des Transponderchips eine Einrichtung zum Abspeichern von Daten, die in einen Transponderchip einzuschreiben sind, da das Bedrucken des Aufzeichnungsträgers und das Ansteuern des Transponderchips zeitverschoben erfolgen.

Alternativ ist die Einrichtung zum Ansteuern des Transponderchips bezüglich der Vorschubrichtung des Aufzeichnungsträgers stromauf der Einrichtung zum Bedrucken des Aufzeichnungsträgers angeordnet, oder sie ist derart nahe am Druckkopf angeordnet, daß sie mit einem Transponderchip zusammenwirkt, der einem Aufzeichnungsträger zugeordnet ist, der von der Einrichtung zum Bedrucken des Aufzeichnungsträgers bedruckt wird.

Weiterin ist vorgeschlagen, daß die Steuerschaltung des Drukkers mit einer Schnittstelle verbunden ist, und daß die Einrichtung zum Ansteuern des Transponderchips an der Schnittstelle angeschlossen ist. Der Vorteil besteht insbesondere in der Nachrüstbarkeit der Einrichtung zum Ansteuern des Transponderchips bei einem mit einer entsprechenden Schnittstelle ausgestatteten Drucker.

Die Einrichtung zum Ansteuern des Transponderchips umfaßt eine Antenne und eine Kontrolleinheit zur Steuerung der Antenne. Die Kontrolleinheit kann an der oben genannten Schnittstelle insbesondere über eine Karte angeschlossen werden. Die Karte stellt vorzugsweise eine serielle oder parallele Schnittstelle bereit, an der die Kontrolleinheit angeschlossen ist.

Wenn der Drucker eingerichtet ist, Daten vom Transponderchip zu lesen, besteht insbesondere die Möglichkeit, in den Transponderchips vom Hersteller abgelegte Seriennummern zu lesen und zu einem Computer zu übertragen. Es besteht somit die Möglichkeit, die Seriennummer des Transponderchips auf einem anderen Datenträger abzuspeichern, und/oder sie in lesbarer Form auf das Etikett zu drucken.

Schließlich ist anzumerken, daß Transponderchips von verschiedenen Herstellern erhältlich sind, die unterschiedliche Protokolle zum Lesen und Schreiben verwenden. Daher wird vorgeschlagen, daß der Drucker eingerichtet ist, den Transponderchip mit einem aus mehreren, unterschiedlichen Protokollen ausgewählten Protokoll anzusteuern. Denkbar ist aber auch ein Drucker mit nur einem, festen Protokoll.

Im folgenden wird eine Ausführungsform der Erfindung anhand der Zeichnungen näher erläutert. Sie zeigen in schematischer Darstellung in
Figur 1: einen Drucker zum Bedrucken von Etiketten mit einer Einrichtung zum Ansteuern von Transponderchips, die in die Etiketten integriert sind;
Figur 2: einen horizontalen Schnitt durch ein Etikett mit Transponderchip;
Figur 3: einen vertikalen Schnitt durch ein Etikett mit Transponderchip;
Figur 4a: einen Schnitt durch eine Halterung für eine Antenne; und
Figur 4b: eine Seitenansicht einer Antenne.

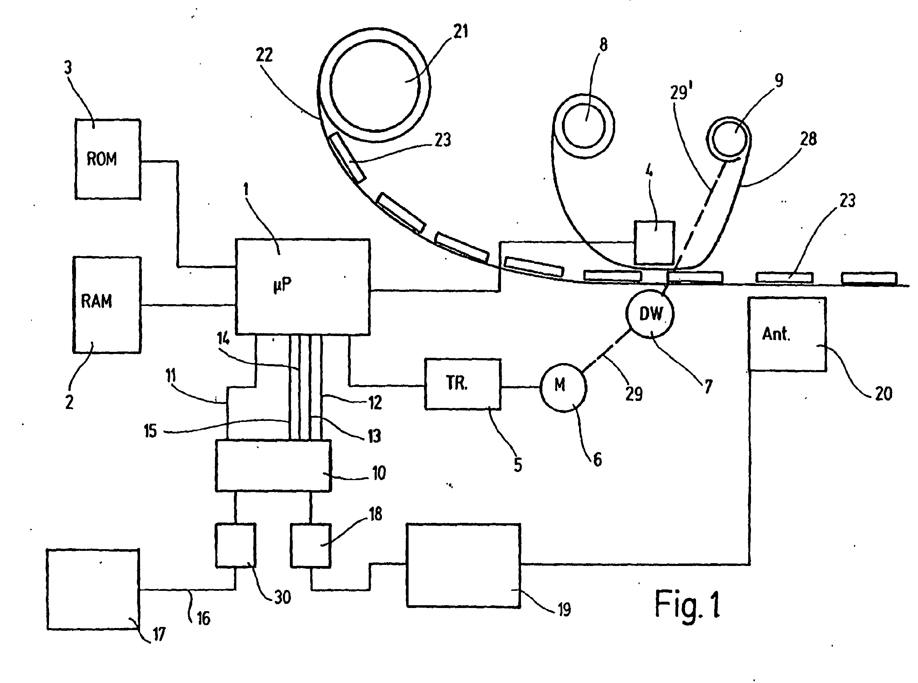

In Figur 1 wird ein erfindungsgemäßer Drucker schematisch anhand eines Blockdiagramms dargestellt. Er besteht in seinem grundsätzlichen Aufbau aus einer Steuerung, die einen Mikroprozessor 1, einen damit verbundenen beschreibbaren Schreib-Lesespeicher (RAM) 2, einen nicht-flüchtigen Speicher (ROM) 3, eine universelle Schnittstelle 10 sowie einen Treiber 5 für einen Motor 6 umfaßt, sowie aus einigen zum Bedrucken von Etiketten notwendigen mechanischen Teilen, die im folgenden näher erläutert werden.

Ein Streifen mit zu bedruckenden Etiketten ist auf einer Vorratsrolle 21 aufgewickelt. Der Streifen besteht aus einem silikonisierten Trägerband 22, auf dem Etiketten 23 ablösbar aufgeklebt sind. Der Etikettenstreifen wird von der Vorratsrolle 21 abgerollt und zwischen einer Druckwalze 7 und einem Druckkopf 4 hindurchgeführt. Außerdem wird ein Farbband 28 von einer Vorratsrolle 8 abgewickelt und auf einer Aufwickelrolle 9 aufgewickelt, und zwischen Druckkopf 4 und dem Etikettenstreifen hindurchgeführt. Der Druckkopf 4 ist ein Thermodruckkopf und weist eine Reihe separat aktivierbarer Heizelemente auf, die bei Aktivierung dazu führen, daß Farbe des Farbbandes 28 schmilzt und auf die zu bedruckende Oberfläche eines Etiketts 23 gelangt und sie somit bedruckt. Die Druckwalze 7 ist durch die Antriebsverbindung 29 mit dem Motor 6 verbunden, und schiebt den Etikettenstreifen und das Farbband 28 durch ihre Drehung durch die durch Druckkopf 4 und Druckwalze 7 definierte Druckzone. Die Aufwickelrolle 9 wird durch eine gestrichelt angedeutete Antriebsverbindung 29', die wie die Antriebsverbindung 29 zwischen Motor 6 und Druckwalze 7 insbesondere durch einen Zahnrad- oder -riemenantrieb realisiert sein kann, über den Motor 6 angetrieben. Geeignete Mechaniken sind in den Druckschriften EP 645248 A, EP 645253 A, EP 645256 A, EP 646469 A und EP 728590 A beschrieben.

Die Steuerung des Druckkopfs 4 und des Motors 6 erfolgt in an sich bekannter Art und Weise. Im ROM 3 sind Programme zur Steuerung des Druckers gespeichert, und im RAM 2 sind auszudruckende Daten in Bitmap-Form gespeichert, oder werden während des Druckens durch den Mikroprozessor 1 anhand von Konversionsroutinen erzeugt. Die Schnittstelle 10 ist detaillierter in der EP 645733 A beschrieben. Der Mikroprozessor ist durch vier Leitungen 12,13,14,15 und einen Bus 11 mit der Schnittstelle 10 verbunden. Der Bus dient zur Übertragung von Datenworten von der Schnittstelle 10 auf den Mikroprozessor 1 und in umgekehrter Richtung, und die Leitungen haben die Aufgabe, die Betriebsart der Schnittstelle 10 zu definieren. Die Leitung 12 ist auf logisch 1, wenn Daten in eine an der Schnittstelle 10 angeschlossene erste Karte geschrieben werden, und die Leitung 13 ist auf logisch 1, wenn Daten von der an der Schnittstelle 10 angeschlossenen ersten Karte gelesen werden. Analog ist die Leitung 14 auf logisch 1, wenn Daten in eine an der Schnittstelle 10 angeschlossene zweite Karte geschrieben werden, und die Leitung 15 ist auf logisch 1, wenn Daten von der an der Schnittstelle 10 angeschlossenen zweiten Karte gelesen werden. Die erste Karte ist hier eine Karte 30 zum Anschluß eines Computers (Host) 17, der als Quelle für die auszudruckenden Daten dient, und über eine Leitung 16 an der Karte 30 angeschlossen ist. Der Mikroprozessor 1 ist also eingerichtet, über die Schnittstelle 10 und die Karte 30 Daten vom externen Computer 17 zu empfangen und an ihn zu senden.

Der Mikroprozessor steuert den Druckkopf 4 und den Motor 6, so daß gewünschte Bilder auf die Etiketten 23 aufgedruckt werden können. Der Motor kann ein Gleichstrommotor oder ein Schrittmotor sein. Im zweiten Fall kann der Treiber 5 wie in der EP 645249 A arbeiten, dh. auf einen Triggerimpuls vom Mikroprozessor 1 eine definierte Anzahl von Steuerimpulsen an den Motor 6 abgeben. In der EP 645249 A ist auch eine geeignete Steuerschaltung für den Druckkopf 4 beschrieben.

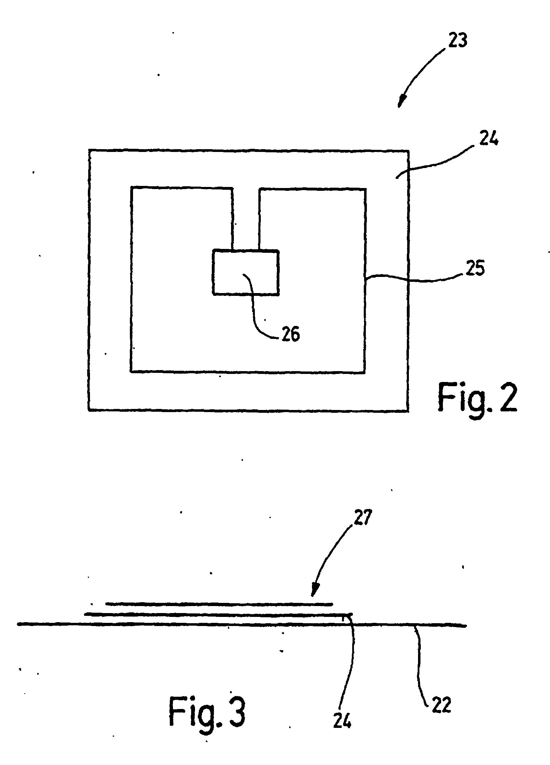

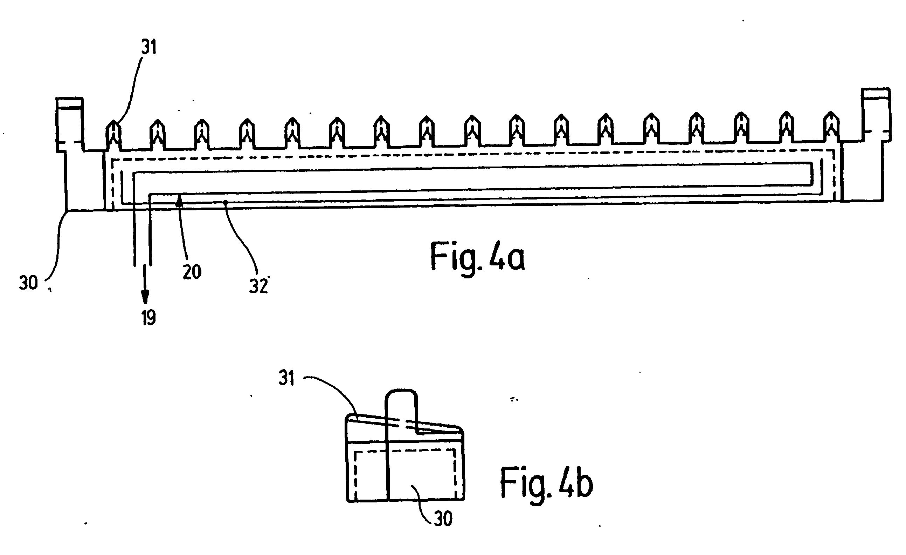

Anhand des in Figur 2 wiedergegeben Schnitts durch das Etikett 23, der in der Ebene des Etiketts verläuft, ist erkennbar, daß das Etikett eine integrierte Antenne 25 und einen daran angeschlossenen Transponderchip 26 enthält. Die Antenne 25 und der Transponderchip 26 sind auf eine Trägerfolie 24 aufgeklebt, die sandwichartig zwischen einer Deckschicht 27 und dem Trägerband 22 angeordnet ist, was anhand des Vertikalschnitts der Figur 3 deutlich wird. Dabei ist der Transponderchip 26 und die Antenne 25 der Deckschicht 27 zugewandt, und die in Figur 3 unten eingezeichnete Unterseite der Trägerfolie 24 mit Klebstoff beschichtet, um das Etikett 23 auf einen Gegenstand aufkleben zu können. Die Deckschicht 27 kann durch den in Figur 1 gezeigten Drucker mit beliebigen Informationen bedruckt werden.

Um beim Bedrucken der Etiketten 23 auch Daten in die Transponderchips 26, die in die Etiketten 23 integriert sind, einschreiben, oder Daten der Transponderchips 26 lesen zu können, oder die Funktion der Transponderchips 26 zu prüfen, um mit diesen Daten z.B. den Drucker (insbesondere auf das Etikett ausgedruckte Informationen) zu steuern, ist der in Figur 1 dargestellte Drucker mit einer Antenne 20 ausgestattet, die eingerichtet ist, mit jeweils wenigstens einem Transponderchip 26 eines Etiketts 23 zusammenzuwirken, oder mit mehreren Transponderchips, die einem Etikett oder mehreren Etiketten zugeordnet sein können. Die Antenne ist mit einer Kontrolleinheit 19 verbunden, die über eine Karte 18 an der Schnittstelle 10 angeschlossen ist. Die Karte 18 ist die oben beschriebene zweite Karte. Die Kontrolleinheit 19 enthält eine Steuerschaltung zu Ansteuerung der Antenne 20 und ermöglicht das Ein- und Auslesen von Daten in einen bzw. aus einem mit der Antenne 20 zusammenwirkenden Transponderchip 26, sowie das Übertragen dieser Daten von und zur Karte 18. Somit ist der Mikropozessor 1 eingerichtet, Daten in serieller oder paralleler Form über die Karte 18 auf die Kontrolleinheit 19 zu übertragen, wenn die Leitung 14 auf logisch 1 ist, und die Kontrolleinheit 19 überträgt diese Daten über die Antenne 20 auf den mit der Antenne 20 zusammenwirkenden Transponderchip 26. Analog ist der Mikroprozessor 1 eingerichtet, Daten über die Karte 18 von der Kontrolleinheit 19 zu empfangen, wenn die Leitung 15 auf logisch 1 ist. Diese Daten empfängt die Kontrolleinheit 19 über die Antenne 20 von dem mit ihr zusammenwirkenden Transponderchip 26 auf ein entsprechendes Abfragesignal. Zusammenfassend ist der Mikroprozessor des Druckers somit eingerichtet, Daten in einen Transponderchip 26 zu schreiben, und Daten daraus auszulesen. Die Karte 18 stellt eine serielle (alternativ: parallele) Schnittstelle bereit, an der die Kontrolleinheit 19 angeschlossen ist. In der dargestellten Ausführungsform wechselwirkt jeweils das zweite Etikett stromab des Druckkopfs 4 mit der Antenne 20.

Geeignete Transponderchips und Abfrageverfahren sind in den Druckschriften EP 301127 A, EP 440040 A, EP 494764 A, EP 496609 A, EP 496610 A, EP 496611 A, EP 537378 A, EP 549832 A, EP 568066 A, EP 600374 A, EP 615136 A, EP 625714 A, EP 632288 A, EP 657836 A, EP 766215 A, EP 768540 A, EP 837412 A und EP 845751 A beschrieben.

Durch eine geeignete Steuerung des Mikroprozessors (über entsprechende, in RAM 2 und/oder ROM 3 gespeicherte Programme) ist der Drucker somit eingerichtet, ein Etikett 23 zu bedrucken und (anschließend) Daten in den Transponderchip 26 des Etiketts zu schreiben. Die in der dargestellten Ausführungsform notwendige Verzögerung zwischen dem Bedrucken und dem Einschreiben der Daten, was sich aufgrund der mechanischen Positionierung der Antenne 20 als notwendig erweist, da bereits das übernächste Etikett 23 bedruckt wird, wenn die Daten in den Transponderchip 26 geschrieben werden, kann leicht durch entsprechende Programmierung des Mikroprozessors 1 (dh. Zwischenspeicherung der Daten für den Transponderchip) erzielt werden.

Es wäre auch denkbar, die Antenne 20 derart anzuordnen, daß sie jeweils mit dem gerade mit dem Druckkopf 4 zusammenwirkenden Etikett 23 interagiert, dh. sie in der unmittelbaren Nähe des Druckkopfs 4 anzuordnen. Dann wäre eine Verzögerung zwischen Drucken und Transponderansteuerung nicht mehr nötig, jedoch einige durch die hochfrequenten Abfragesignale bedingte Schwierigkeiten zu überwinden, wie die Abschirmung der Antenne durch den Druckkopf oder die Druckwalze und eine unerwünschte Einstrahlung von der Antenne in den Druckkopf, etc.

Die Antenne 20 könnte auch stromaufwärts des Druckkopfs 4 angeordnet werden, so daß die Transponderchips 26 bereits vor dem Drucken beschrieben und/oder ausgelesen werden. In diesem Fall könnte eine in den Transponderchips 26 abgespeicherte Information zum Bedrucken der Etiketten verwendet werden, wie z.B. eine zu druckende Seriennummer.

Weiterhin könnte bereits vor dem Bedrucken die Funktion der Transponderchips 26 geprüft werden, so daß Etiketten 23 mit fehlerhaften Transponderchips 26 durch den Druckkopf als unbrauchbar gekennzeichnet, z.B. geschwärzt werden könnten. In der in Figur 1 dargestellten Ausführungsform, bei der eine Ansteuerung der Transponderchips 26 nach dem Bedrucken erfolgt, kann analog anstelle des beschriebenen Einschreibens von Daten in die Transponderchips 26 (oder zusätzlich dazu) die Funktion der Transponderchips 26 durch Mikroprozessor 1, Kontrolleinheit 19 und Antenne 20 getestet werden. Dazu werden (Test-) Daten in die Transponderchips 26 eingeschrieben und anschließend ausgelesen. Wenn die ausgelesenen Daten nicht mit den geschriebenen Daten übereinstimmen, ist der Transponderchip 26 defekt. In diesem Fall bietet es sich an, den Etikettenstreifen zurückzufahren, so daß das Etikett mit dem defekten Transponderchip 26 unter dem Druckkopf 4 steht, und es als unbrauchbar zu kennzeichnen (einzuschwärzen). Das Zurückfahren des Etikettenstreifens erfordert eine Umkehrung der Drehrichtung der Druckwalze 7, und/oder das Abheben des Druckkopfs 4 von der Druckwalze 7, und einen separaten Antrieb des Etikettenbandes, der beispielsweise durch ein Walzenpaar erfolgen kann. Dabei kann die Aufwickelspule 9 für das Farbband 28 arretiert werden. Ein zum Zurückfahren von Etiketten geeigneter Mechanismus ist in der EP 645248 A und EP 645253 A beschrieben. Ein Vorteil des Testens der Transponderchips 26 nach dem Bedrucken besteht darin, daß die Chips bereits der Wärme- und Druckbelastung durch den Druckkopf 4 ausgesetzt waren, so daß nicht ganz einwandfreie Transponderchips 26 mit höherer Sicherheit defekt sind, als vor dem Bedrucken.

Bei einer Anordnung der Antenne 20 stromab des Druckkopfs 4, wie sie in Figur 1 dargestellt ist, ist ein bevorzugtes Steuerungsverfahren des Druckers derart ausgestaltet, daß die Antenne mit einem jeweils bedruckten Transponderchip zusammenwirkt (in Figur 1 müßte die Antenne somit in Richtung auf die Druckwalze 7 zu nach links versetzt werden), und daß mittels der Antenne 20 und der Kontrolleinheit 19 durch die Steuerung des Druckers eine Überwachung durchgeführt wird, ob ein Etikett 23 mit einem Transponderchip 26 in den Wirkungsbereich der Antenne 20 gelangt ist. Falls das Ergebnis positiv ist, wird berechnet, welche Zeit zum Programmieren des Transponderchips 26 erforderlich ist. Diese Zeit hängt insbesondere von der Menge der einzuschreibenden und/oder auszulesenden Daten ab. Außerdem wird berechnet, über welche Länge des Etiketts 23 eine Ansteuerung des Transponderchips 26 durch die Antenne 20 möglich ist. Diese Länge hängt ab von den Abmessungen der Antenne 20, ihrem Abstand vom Etikettenstreifen, und von den Abmessungen der Antenne 25 des Etiketts 23. Anhand der berechneten Zeit und der Länge, über die eine Ansteuerung möglich ist, wird die Druck- und somit Vorschubgeschwindigkeit des Etikettenstreifens festgelegt. Diese Geschwindigkeit wird möglichst hoch gewählt, aber insbesondere nur derart hoch, daß der hintere Rand des Etiketts nach dem Einschreiben und Lesen der Daten noch unter dem Druckkopf 4 verbleibt, um das Etikett im Fehlerfall (ausgelesene und geschriebene Daten stimmen nicht überein) als unbrauchbar kennzeichnen zu können, dh. mit einem geeigneten Aufdruck zu versehen. Die Druckgeschwindigkeit wird also möglichst hoch gewählt, aber nur so hoch, daß eine Kennzeichnung des Etiketts als unbrauchbar auch ohne Zurückfahren des Etikettenstreifens möglich ist.

In Figur 4a ist ein Schnitt durch eine Halterung 30 mit einer darin enthaltenen Antenne 20 dargestellt. Die Antenne 20 erstreckt sich über die gesamte Breite eines Aufzeichnungsträgers, der die maximal im Drucker verwendbare Breite aufweist. Alternativ wäre auch eine schmalere, und gegebenenfalls weiter vom Aufzeichnungsträger beabstandete und/oder über die Breite des Aufzeichnugsträgers verschiebbare Antenne denkbar. Die Antenne 20 ist an der dem Aufzeichungsträger abgewandten, unteren Seite mit einer Metallabschirmung 32 versehen, um die Elektronik im Innenraum des Druckers vor unerwünschten Einstrahlungen zu schützen. Das Ergebnis ist, daß der Drucker nur eine einzige Antenne für alle Etikettengrößen benötigt, und daß keine Anpassung hinsichtlich der Position der Antenne beim Wechsel des Aufzeichnungsträgerformats notwendig wird. Die Antenne ist in allen Betriebsarten des Druckers, dh. beim kontinuierlich aufeinanderfolgenden Bedrucken eines Etikettenstreifens, und beim Einzeletikettenbedrucken und -spenden verwendbar. Die Antenne 20 ist in einer Halterung 30 aus Kunststoff angebracht, die an ihrer dem Aufzeichnungsträger zugewandten Oberseite mit Rippen 31 versehen ist. In anderen Ausführungsformen, bei denen keine selbstklebenden Etiketten verarbeitet werden, können die Rippen auch entfallen. Die Halterung wird vorzugsweise an der Außenseite des Gehäuses des Druckers angebracht. Da eine Spendkante, an der die Etiketten 23 von ihrem Trägerband 22 abgelöst werden, im Regelfall innerhalb des Druckergehäuses (und somit stromauf der Antenne 20) angebracht ist, vermeiden die Rippen 31, daß die rückseitig mit Klebstoff beschichteten Etiketten 23 an der Halterung festkleben. Die Halterung 30 kann lösbar am Gehäuse des Druckers befestigt sein, analog der in der DE 19513140 A beschriebenen Etikettenauflage. Figur 4b zeigt eine Seitenansicht der Halterung 30.

Im Ergebnis erhält man einen Drucker, der in einfacher Weise ermöglicht, einen Aufzeichnungsträger zu bedrucken und darin enthaltene Transponderchips anzusteuern.

## Patentansprüche

1. Drucker, mit einer Einrichtung zum Bedrucken eines Aufzeichnungsträgers, der wenigstens einen Transponderchip (26) enthält, einer Einrichtung zum Ansteuern des Transponderchips (26) und einem Druckkopf (4), wobei die Einrichtung zum Ansteuern des Transponderchips (26) eine Antenne (20) und eine Kontrolleinheit (19) zur Steuerung der Antenne (20) umfasst, **dadurch gekennzeichnet, dass** die Steuerschaltung des Druckers die Druckgeschwindigkeit in Abhängigkeit von der zum Programmieren des Transponderchips (26) erforderlichen Zeit, und von dem Vorschubweg des Aufzeichnungsträgers, über den eine Ansteuerung eines jeweils bedruckten Transponderchips (26) durch die Antenne (20) möglich ist, festlegt und die Druckgeschwindigkeit möglichst hoch gewählt wird, aber nur so hoch, dass der hintere Rand eines Etiketts (23) auf dem Aufzeichnungsträger nach dem Einschreiben und Lesen der Daten noch unter dem Druckkopf (4) verbleibt.

2. Drucker nach Anspruch 1, **dadurch gekennzeichnet, dass** der Aufzeichnungsträger ein Etikettenstreifen ist, und dass Transponderchips (26) in die Etiketten integriert sind.

3. Drucker nach einem der vorhergehenden Ansprüche, **dadurch gekennzeichnet, dass** die Einrichtung zum Bedrucken des Aufzeichnungsträgers einen Thermodruckkopf (4) oder einen Tintenstrahldruckkopf aufweist.

4. Drucker nach einem der vorhergehenden Ansprüche, **dadurch gekennzeichnet, dass** der Drucker eine Steuerschaltung zum Ansteuern der Einrichtung zum Bedrucken des Aufzeichnungsträgers aufweist, und dass die Steuerschaltung auch zum Steuern der Einrichtung zum Ansteuern des Transponderchips (26) eingerichtet ist.

5. Drucker nach Anspruch 4, **dadurch gekennzeichnet, dass** die Steuerschaltung einen Mikroprozessor (1) umfasst.

6. Drucker nach einem der vorhergehenden Ansprüche, **dadurch gekennzeichnet, dass** die Einrichtung zum Ansteuern des Transponderchips (26) eingerichtet ist, Daten in den Transponderchip zu schreiben und/oder eingerichtet ist, Daten aus dem Transponderchip zu lesen.

7. Drucker nach Anspruch 6, **dadurch gekennzeichnet, dass** die auf den Transponderchip auszugebenden Daten als zusätzliches Datenfeld von Daten, die einen bedruckten Aufzeichnungsträger definieren, von einer Datenquelle zum Drucker übertragen werden.

8. Drucker nach Anspruch 6, **dadurch gekennzeichnet, dass** die Transponderdaten separat von einer Datenquelle zum Drucker übertragen werden.

9. Drucker nach einem der vorhergehenden Ansprüche, **dadurch gekennzeichnet, dass** die Einrichtung zum Ansteuern des Transponderchips (26) eingerichtet ist, die Funktion des Transponderchips zu testen, insbesondere durch Einschreiben und Auslesen von Daten, und Vergleich der ausgelesenen Daten mit den eingeschriebenen Daten.

10. Drucker nach Anspruch 9, **dadurch gekennzeichnet, dass** die Einrichtung zum Bedrucken des Aufzeichnungsträgers derart angesteuert wird, dass ein einem Transponderchip (26), der einen Funktionstest nicht bestanden hat, zugeordneter Aufzeichnungsträger als unbrauchbar **gekennzeichnet** wird.

11. Drucker nach einem der vorhergehenden Ansprüche, **dadurch gekennzeichnet, dass** die Einrichtung zum Ansteuern des Transponderchips (26) bezüglich einer Vorschubrichtung des Aufzeichnungsträgers stromab der Einrichtung zum Bedrucken des Aufzeichnungsträgers angeordnet ist.

12. Drucker nach einem der Ansprüche 1 bis 11, **dadurch gekennzeichnet, dass** die Einrichtung zum Ansteuern des Transponderchips (26) derart angeordnet ist, dass sie mit dem Transponderchip eines Aufzeichnungsträgers zusammenwirkt, der von der Einrichtung zum Bedrucken des Aufzeichnungsträgers bedruckt wird.

13. Drucker nach einem der Ansprüche 1 bis 12, **dadurch gekennzeichnet, dass** die Steuerschaltung mit einer Schnittstelle (10) verbunden ist, und dass die Einrichtung zum Ansteuern des Transponderchips (26) an der Schnittstelle (10) angeschlossen ist.

14. Drucker nach Anspruch 1, **dadurch gekennzeichnet, dass** die Kontrolleinheit (19) an der Schnittstelle (10), insbesondere über eine Karte (18) an der Schnittstelle (10) angeschlossen ist.

15. Drucker nach Anspruch 14, **dadurch gekennzeichnet, dass** die Karte (18) eine serielle oder parallele Schnittstelle bereitstellt, an der die Kontrolleinheit (19) angeschlossen ist.

16. Drucker nach einem der vorhergehenden Ansprüche, **dadurch gekennzeichnet, dass** der Drucker eingerichtet ist, vom Transponderchip gelesene Daten, insbesondere eine Seriennummer, zu lesen und zu einem Computer zu übertragen.

17. Drucker nach einem der vorhergehenden Ansprüche, **dadurch gekennzeichnet, dass** das vom Drucker verwendete Protokoll zur Ansteuerung des Transponderchips (26) unter unterschiedlichen Protokollen auswählbar ist.

18. Drucker nach Anspruch 1, **dadurch gekennzeichnet, dass** sich die Antenne (20) über die maximal mögliche Breite eines Aufzeichnungsträgers erstreckt.

19. Drucker nach Anspruch 1, **dadurch gekennzeichnet, dass** die Antenne (20) an ihrer dem Aufzeichnungsträger abgewandten Seite mit einer Metallabschirmung versehen ist.

## Claims

1. A printer with a device for printing a data carrier containing at least one transponder chip (26), a device for driving the transponder chip (26) and a print head (4), whereby the device for driving the transponder chip (26) is comprised of an antenna (20) and a control unit (19) to control the antenna (20),
**characterized in that** the control circuit of the printer establishes the printing speed in dependence upon the time required for programming the transponder chip (26), and upon the length of feed of the data carrier over which driving of a respectively printed transponder chip (26) by the antenna (20) is possible, and the printing speed is selected as high as possible, but only high enough to enable the trailing edge of a label (23) on the data carrier to remain beneath the print head (4) after the data is written and read.

2. The printer according to claim 1, **characterized in that** the data carrier is a label strip and that transponder chips (26) are integrated in the labels.

3. The printer according to any one of the preceding claims, **characterized in that** the device for printing the data carrier includes a thermal print head (4) or an ink-jet print head.

4. The printer according to any one of the preceding claims, **characterized in that** the printer has a control circuit for driving the device for printing the data carrier, and that the control circuit is also configured to control the device for driving the transponder chip (26).

5. The printer according to claim 4, **characterized in that** the control circuit comprises a microprocessor (1).

6. The printer according to any one of the preceding claims, **characterized in that** the device for driving the transponder chip (26) is configured to write data into the transponder chip and/or to read data out of the transponder chip.

7. The printer according to claim 6, **characterized in that** the data to be output onto the transponder chip is transmitted to the printer from a data source as an additional field of data defining a printed data carrier.

8. The printer according to claim 6, **characterized in that** the transponder data is transmitted separately from a data source to the printer.

9. The printer according to any one of the preceding claims, **characterized in that** the device for driving the transponder chip (26) is configured to test the function of the transponder chip, in particular by writing in and reading out data and comparing the read data with the written data.

10. The printer according to claim 9, **characterized in that** the device for printing the data carrier is driven in such manner that a data carrier assigned to a transponder chip (26) that has not passed a function test is identified as useless.

11. The printer according to any one of the preceding claims, **characterized in that** the device for driving the transponder chip (26) is arranged downstream from the device for printing the data carrier in relation to a feed direction of the data carrier.

12. The printer according to any one of claims 1-11, **characterized in that** the device for driving the transponder chip (26) is arranged so as to interact with transponder chip of a data carrier being printed by the device for printing the data carrier.

13. The printer according to any one of the claims 1-12, **characterized in that** the control circuit is connected to an interface (10), and that the device for driving the transponder chip (26) is connected to said interface (10).

14. The printer according to claim 1, **characterized in that** the control unit (15) is connected to the interface (10), being in particular connected to the interface (10) by way of a card (18).

15. The printer according to claim 14, **characterized in that** the card (18) provides a serial or parallel interface to which the control unit (19) is connected.

16. The printer according to any one of the preceding claims, **characterized in that** the printer is configured to read data read by the transponder chip, in particular to read a serial number, and to transmit the data to a computer.

17. The printer according to any one of the preceding claims, **characterized in that** the protocol used by the printer for driving the transponder chip (26) is selectable from different protocols.

18. The printer according to claim 1, **characterized in that** the antenna (20) extends across the maximum possible width of a data carrier.

19. The printer according to claim 1, **characterized in that** the antenna (20) is equipped with a metal shield on its side facing away from the data carrier.

## Revendications

1. Imprimante, avec un système d'impression d'un support d'enregistrement qui contient au moins une puce de transpondeur (26), un système pour exciter la puce de transpondeur (26) et une tête d'impression (4), dans laquelle le système d'excitation de la puce de transpondeur (26) comprend une antenne (20) et un module de contrôle (19) pour commander l'antenne (20), **caractérisée en ce que** le circuit de commande de l'imprimante détermine la vitesse d'impression en fonction du temps nécessaire pour programmer la puce de transpondeur (26) et de la course d'avance du support d'enregistrement sur lequel une puce de transpondeur (26) respectivement imprimée peut être excitée par l'antenne (20), et la vitesse d'impression est sélectionnée à la valeur la plus élevée possible mais seulement jusqu'à une valeur telle que le bord arrière d'une étiquette (23) sur le support d'enregistrement se trouve encore sous la tête d'impression (4) après l'écriture et la lecture des données.

2. Imprimante selon la revendication 1, **caractérisée en ce que** le support d'enregistrement est une bande d'étiquettes et **en ce que** des puces de transpondeur (26) sont intégrées dans les étiquettes.

3. Imprimante selon l'une des revendications précédentes, **caractérisée en ce que** le système d'impression du support d'enregistrement présente une tête d'impression thermique (4) ou une tête, d'impression par jet d'encre.

4. Imprimante selon l'une des revendications précédentes, **caractérisée en ce que** l'imprimante présente un circuit de commande pour exciter le système d'impression du support d'enregistrement et **en ce que** le circuit de commande est également agencé pour commander le système d'excitation de la puce de transpondeur (26).

5. Imprimante selon la revendication 4, **caractérisée en ce que** le circuit de commande comprend un microprocesseur (1).

6. Imprimante selon l'une des revendications précédentes, **caractérisée en ce que** le système d'excitation de la puce de transpondeur (26) est agencé pour écrire des données dans la puce de transpondeur et/ou pour lire des données à partir de la puce de transpondeur.

7. Imprimante selon la revendication 6, **caractérisée en ce que** les données à délivrer à la puce de transpondeur sont transmises par une source de données à l'imprimante sous la forme d'un champ de données supplémentaire de données définissant un support d'enregistrement imprimé.

8. Imprimante selon la revendication 6, **caractérisée en ce que** les données de transpondeur sont transmises séparément par une source de données à l'imprimante.

9. Imprimante selon l'une des revendications précédentes, **caractérisée en ce que** le système d'excitation de la puce de transpondeur (26) est agencé pour tester la fonction de la puce de transpondeur, en particulier en écrivant et en lisant des données, et pour comparer les données lues aux données écrites.

10. Imprimante selon la revendication 9, **caractérisée en ce que** le système d'impression du support d'enregistrement est commandé de telle façon qu'un support d'enregistrement associé à une puce de transpondeur (26) qui a échoué à un test fonctionnel est **caractérisé** comme inutilisable.

11. Imprimante selon l'une des revendications précédentes, **caractérisée en ce que** le système d'excitation de la puce de transpondeur (26) est disposé en aval du système d'impression du support d'enregistrement dans le sens d'avance du support d'enregistrement.

12. Imprimante selon l'une des revendications 1 à 11, **caractérisée en ce que** le système d'excitation de la puce de transpondeur (26) est agencé de façon à coopérer avec la puce de transpondeur d'un support d'enregistrement qui est imprimé par le système d'impression du support d'enregistrement.

13. Imprimante selon l'une des revendications 1 à 12, **caractérisée en ce que** le circuit de commande est relié à une interface (10) et **en ce que** le système d'excitation de la puce de transpondeur (26) est connecté à cette interface (10).

14. Imprimante selon la revendication 1, **caractérisée en ce que** le module de contrôle (19) est relié à l'interface (10), en particulier par le biais d'une carte (18).

15. Imprimante selon la revendication 14, **caractérisée en ce que** la carte (18) constitue une interface en série ou parallèle à laquelle le module de contrôle (19) est relié.

16. Imprimante selon l'une des revendications précédentes, **caractérisée en ce que** l'imprimante est agencée pour lire les données lues à partir de la puce de transpondeur, en particulier un numéro de série, et pour les transmettre à un ordinateur.

17. Imprimante selon l'une des revendications précédentes, **caractérisée en ce que** le protocole que l'imprimante utilise pour exciter la puce de transpondeur (26) est sélectionnable parmi différents protocoles.

18. Imprimante selon la revendication 1, **caractérisée en ce que** l'antenne (20) s'étend sur la largeur maximale possible d'un support d'enregistrement.

19. Imprimante selon la revendication 1, **caractérisée en ce que** l'antenne (20) est dotée d'un blindage métallique sur son côté opposé au support d'enregistrement.
